# EUROPÄISCHE PATENTSCHRIFT

(11) **EP 2 379 567 B1**
(45) Veröffentlichungstag und Bekanntmachung des Hinweises auf die Patenterteilung: **03.08.2016**
(21) Anmeldenummer: 09760918.4
(22) Anmeldetag: 03.12.2009
(51) Int. Cl.: C07F 7/18

(54) **VERFAHREN ZUR SILYLIERUNG VON MONOCARBONSÄUREN**
METHOD FOR SILYLATION OF MONOCARBOXYLIC ACIDS
PROCÉDÉ DE SILYLATION D'ACIDES MONOCARBOXYLIQUES

(30) Priorität: 16.12.2008 DE 102008054740; 16.12.2008 US 122862 P
(43) Veröffentlichungstag der Anmeldung: 26.10.2011
(73) Patentinhaber: BASF SE, 67056 Ludwigshafen am Rhein (DE)
(72) Erfinder: THOMAS, Florian, 67169 Kallstadt (DE); PETZOLDT, Jochen, 67273 Weisenheim am Berg (DE); GÄRTNER, Martin, 67549 Worms (DE)
(74) Vertreter: BASF IP Association
(86) Internationale Anmeldenummer: PCT/EP2009/066332
(87) Internationale Veröffentlichungsnummer: WO 2010/072532

(56) Entgegenhaltungen:
- EP-A1- 1 273 589
- EP-A1- 1 431 301
- WO-A2-03/062171

## Beschreibung

Die vorliegende Erfindung betrifft ein Verfahren zur Herstellung von silylierten Monocarbonsäuren durch Umsetzung von Monocarbonsäuren in Gegenwart einer Hilfsbase.

Die Silylierung von Carbonsäuren ist in der Literatur bekannt. So offenbaren A. Shihada et al. in Z. Naturforsch. B 1980, 35, 976-980 die Umsetzung von Essigsäure mit Trimethylchlorsilan in Diethylether unter Zugabe von Diethylamin. V. F. Mironov et al. beschreiben in Chem. Heterocycl. Compd. 1966, 2, 334-337 die Silylierung unter anderem von Methacrylsäure ebenfalls mit Trimethylchlorsilan in Gegenwart von N,N-Diethylanilin als Hilfsbase in Diethylether. Nachteilig an diesen Verfahren ist die Bildung von voluminösen und schlecht filtrierbaren Hydrochlorid-Niederschlägen, welche zu Ausbeuteverlusten bei der Filtration führen. Eine wirtschaftlich attraktive Regenerierung der Hilfsbase wird durch die aufwendige Feststoffhandhabung erschwert.

Die Silylierung von Acrylsäure mit Hexamethylsilizan wird von V. I. Rakhlin et al. in Russ. J. Org. Chem. 2004, 40 S. beschrieben. Die Reaktion ist nachteilig, da eine kontinuierliche Entfernung des freiwerdenden Ammoniaks erforderlich ist. Außerdem erfordert das Verfahren lange Reaktionszeiten bei höheren Temperaturen und liefert nur mäßige Ausbeuten.

Die Herstellung von Trimethylsilylcarboxylaten ist ebenfalls von C. Palermo in Synthesis 1981, 809-811 beschrieben. Die Umsetzung der Carbonsäure erfolgt mit N-Trimethylsilyl-2-oxazolidon in halogenierten Lösungsmitteln wie Tetrachlorkohlenstoff oder Dichlormethan. Für die industrielle Anwendung ist dieser Reaktionsweg unpraktikabel, da einerseits die Verwendung eines halogenierten Lösungsmittels problematisch ist. Darüber hinaus ist die Synthese kostenintensiv, da zusätzlich noch die vorherige Synthese des Silylierungsreagenzes notwendig ist. Die Abtrennung des 2-Oxazolidons vom Produkt erfolgt durch aufwendige Kristallisation und Filtration.

Die vorherige Synthese des Silylierungsreagenzes wird auch in Synth. Commun. 1982, 12, 225-230 von Banerji et al. offenbart. Bei der Umsetzung mit der Carbonsäure fällt Imidazol als Nebenprodukt an, welches unter Hinnahme von Ausbeuteverlusten durch Filtration vom Produkt abgetrennt werden muss.

Ein anderer Herstellungsweg wird von Y.-F. Du et al. in J. Chem. Res. Synop. 2004,3, S. 223-225 beschrieben. Darin wird die Umsetzung von Natriumacetat mit Trimethylchlorsilan in Lösungsmitteln wie Diethylether, PEG-400 oder Benzol offenbart. Als Edukt wurde das Natriumsalz der Carbonsäure eingesetzt, welches zunächst hergestellt und sorgfältig getrocknet werden musste. Bei der Synthese fällt infolgedessen Natriumchlorid als Nebenprodukt an, welches abfiltriert werden muss.

In WO 2003/062171 A2 ist ein Verfahren zur Abtrennung von Säuren, die im Laufe der Reaktion als Nebenprodukt entstehen oder der Mischung beispielsweise zur pH-Wertregulierung zugesetzt werden, aus Reaktionsgemischen mittels einer Hilfsbase wie 1-Methylimidazol oder 2-Ethylpyridin bekannt. Die Säuren bilden mit der Hilfsbase ein Flüssigsalz, welches mit dem Wertprodukt nicht mischbar ist und deshalb mittels flüssig-flüssig-Phasentrennung abgetrennt werden kann. Beispielhaft sind Silylierungen von Alkoholen oder Aminen mit Halogensilanen beschrieben. Als abzutrennende Säuren werden Salzsäure und Essigsäure offenbart. Ein Verfahren zur Silylierung von Monocarbonsäuren wird nicht offenbart.

Die internationale Anmeldung WO 2005/061416 A1 offenbart ebenfalls ein Verfahren zur Abtrennung von Säuren aus Reaktionsgemischen mittels einer Hilfsbase, wobei es sich bei der Hilfsbase um ein Alkylimidazol handelt, das eine Löslichkeit in 30 Gew.-%iger Natriumchloridlösung bei 25 °C von 10 Gew.-% oder weniger und dessen Hydrochlorid einen Schmelzpunkt unter 55 °C aufweist. Nach der Lehre dieser Anmeldung werden die Hilfsbasen zur Abtrennung von Säuren eingesetzt, die im Laufe der Reaktion entstehen oder während der Reaktion beispielsweise zur pH-Wertregulierung zugesetzt werden. Ein Verfahren zur Silylierung von Monocarbonsäuren wird nicht offenbart.

Aus der EP 1 273 589 A1 ist ein Verfahren zur Silylierung von Monocarbonsäuren bekannt, das sich durch die Umsetzung eines Anhydrids mit einem Trialkoxysilan auszeichnet. In dieser Schrift wird ein tertiäres Amin lediglich als Katalysator, aber nicht im stöchiometrischen Umfang als Hilfsbase eingesetzt.

Der vorliegende Erfindung lag daher die Aufgabe zu Grunde, ein weiteres, alternatives Verfahren zur Silylierung von Monocarbonsäuren zur Verfügung zu stellen, welches sich durch hohe Ausbeuten und hohe Selektivität auszeichnet und wirtschaftlich attraktiv ist.

Die Aufgabe wurde gelöst durch ein Verfahren zur Herstellung von silylierten Monocarbonsäuren durch Umsetzung von C₂-C₁₀-Monocarbonsäuren mit Halogensilanen der allgemeinen Formel (I)

SiHal₄₋ₓRₓ (I),

worin
- Hal: ein Halogenatom ausgewählt aus der Gruppe Fluor, Chlor, Brom oder Iod ist,
- R: unabhängig voneinander Wasserstoff, C₁-C₁₀-Alkyl oder Aryl ist, und
- x: eine ganze Zahl von 0 bis 3 ist,
unter Bildung von Halogenwasserstoff in Gegenwart einer Hilfsbase, in dem die Hilfsbase mit dem Halogenwasserstoff ein Salz bildet, das mit dem Wertprodukt oder der Lösung des Wertproduktes in einem geeigneten Lösungsmittel zwei nicht mischbare Phasen ausbildet und abgetrennt wird.

Nach dem erfindungsgemäßen Verfahren werden silylierte Monocarbonsäuren einfach und wirtschaftlich attraktiv hergestellt, in dem der während der Reaktion freiwerdende Halogenwasserstoff mit der Hilfsbase ein Salz bildet, welches mit der silylierten Monocarbonsäure nicht mischbar ist. Dabei entfernt die zugesetzte Hilfsbase überraschenderweise selektiv den Halogenwasserstoff und nicht die Monocarbonsäure aus dem Reaktionsgemisch. Durch eine einfache Phasentrennung kann das Wertprodukt von diesem Salz der Hilfsbase mit dem Halogenwasserstoff getrennt werden. Die Silylierung der Monocarbonsäure verläuft schell und mit hohen Ausbeuten.

Das erfindungsgemäße Verfahren eignet sich für die Umsetzung von C₂-C₁₀-Monocarbonsäuren, mit Halogensilanen der allgemeinen Formel (I). Dabei ist es unerheblich, ob es sich um eine gesättigte oder um eine ein- oder mehrfach ungesättigte Monocarbonsäure handelt. Bevorzugt eignet sich das erfindungsgemäße Verfahren für gesättigte C₂-C₈-Monocarbonsäuren und monoethylenisch ungesättigte C₃-C₈-Monocarbonsäuren.

Gesättigte C₂-C₈-Monocarbonsäuren sind beispielsweise Essigsäure, Propionsäure, Buttersäure, Valeriansäure (Pentansäure), Capronsäure (Hexansäure), Heptansäure und Octansäure (Caprylsäure) sowie deren Isomere. Bevorzugt von dieser Gruppe sind C₂-C₄-Monocarbonsäuren wie Essigsäure, Propionsäure und Buttersäure.

Zu der Gruppe der monoethylenisch ungesättigte Monocarbonsäuren mit 3 bis 8 C-Atomen gehören beispielsweise Acrylsäure, Methacrylsäure, Dimethacrylsäure, Ethacrylsäure, α-Chloracrylsäure, Maleinsäure, Fumarsäure, Itaconsäure, Mesaconsäure, Citraconsäure, Glutaconsäure, Aconitsäure, Methylenmalonsäure, Allylessigsäure, Vinylessigsäure und Crotonsäure. Bevorzugte monoethylenisch ungesättigte Monocarbonsäuren sind Acrylsäure, Methacrylsäure, Crotonsäure, Ethacrylsäure und Maleinsäure.

Selbstverständlich können in dem erfindungsgemäßen Verfahren auch beliebige Mischungen der zuvor genannten C₂-C₁₀-Monocarbonsäuren eingesetzt werden, bevorzugt wird jedoch nur eine C₂-C₁₀-Monocarbonsäure mit Halogensilan umgesetzt.

Die eingesetzte C₂-C₁₀-Monocarbonsäure wird in Bezug auf das Halogensilan in äquimolaren Mengen oder im Überschuss eingesetzt. Es werden bevorzugt 1,0 bis 2,0 mol/mol, besonders bevorzugt 1,0 bis 1,5 mol/mol und insbesondere 1,0 bis 1,2 mol/mol eingesetzt. Ein Überschuss an C₂-C₁₀-Monocarbonsäure ist insbesondere dann erforderlich, wenn die Hilfsbase durch das phasenvermittelnd wirkende Extraktionsmittel verunreinigt ist.

Die Halogensilane sind solche der allgemeinen Formel (I)

SiHal₄₋ₓRₓ (I),

worin
Hal ein Halogenatom ausgewählt aus der Gruppe Fluor, Chlor, Brom oder Iod ist,
R unabhängig voneinander Wasserstoff, C₁-C₁₀-Alkyl oder Aryl ist, und
x eine ganze Zahl von 0 bis 3 ist.

Bevorzugte Halogene sind Chlor und Brom. Enthält das Halogensilan mehr als ein Halogenatom, d.h. x ist ungleich 3, können auch Mischungen der Halogenatome enthalten sein. Bevorzugt besteht das Halogensilan jedoch nur aus einer Art von Halogenatomen, besonders bevorzugt nur aus Chlor oder Brom.

Die Substituenten R können gleich oder verscheiden sein und unabhängig voneinander Wasserstoff, C₁-C₁₀-Alkyl oder Aryl sein. Bevorzugt sind die Substituenten R gleich oder verschieden und unabhängig voneinander C₁-C₁₀-Alkyl oder Aryl, besonders bevorzugt gleich und C₁-C₄-Alkyl oder Phenyl.

Unter C₁-C₁₀-Alkyl im Sinne der vorliegenden Erfindung werden geradkettige oder verzweigte Kohlenwasserstoffreste mit bis zu 10 Kohlenstoffatomen verstanden, wie beispielsweise Methyl, Ethyl, Propyl, Isopropyl, n-Butyl, sec-Butyl, tert.-Butyl, 1,1-Dimethylethyl, Pentyl, 2-Methylbutyl, 1,1-Dimethylpropyl, 1,2-Dimethylpropyl, 2,2-Dimethylpropyl, 1-Ethylpropyl, Hexyl, 2-Methylpentyl, 3-Methylpentyl, 1,1-Dimethylbutyl, 1,2-Dimethylbutyl, 1,3-Dimethylbutyl, 2,2-Dimethylbutyl, 2,3-Dimethylbutyl, 3,3-Dimethylbutyl, 2-Ethylbutyl, 1,1,2-Trimethylpropyl, 1,2,2-Trimethylpropyl, 1-Ethyl-1-methylpropyl, 1-Ethyl-2-methylpropyl, Heptyl, Octyl, 2-Ethylhexyl, 2,4,4-Trimethylpentyl, 1,1,3,3-Tetramethylbutyl, Nonyl und Decyl sowie deren Isomere. Bevorzugt sind geradkettige oder verzweigte Alkylreste mit 1 bis 4 C-Atomen.

Unter Aryl im Sinne der vorliegenden Erfindung werden ein- bis dreikernige aromatische Ringsysteme enthaltend 6 bis 14 Kohlenstoffringglieder verstanden, beispielsweise Phenyl, Naphthyl und Anthryl, bevorzugt ein einkerniges aromatisches Ringsystem, besonders bevorzugt Phenyl.

In der Formel (I) ist x eine ganze Zahl von 0 bis 3, bevorzugt eine ganze Zahl von 1 bis 2, und besonders bevorzugt ist x = 1.

Typischerweise einsetzbare Halogensilane sind beispielsweise SiCl(CH₃)₃, SiCl₂(CH₃)₂, SiCl₃CH₃, SiCl(C₂H₅)₃, SiCl₃C₂H₅, SiCl(iso-C₃H₇)₃, SiCl(n-C₄H₉)₃, SiCl(tert.-C₄H₉)₃, SiCl₃(n-C₄H₉), SiCl₃(tert.-C₄H₉), SiCl(n-C₄H₉)(CH₃)₂und SiCl(tert.-C₄H₉)(CH₃)₂, bevorzugt SiCl(CH₃)₃, SiCl(C₂H₅)₃, SiCl(iso-C₃H₇)₃, SiCl(n-C₄H₉)₃, SiCl(tert.-C₄H₉)₃,und SiCl(tert.-C₄H₉)(CH₃)₂.

Selbstverständlich können in dem erfindungsgemäßen verfahren beliebige Mischungen der genannten Halogensilane eingesetzt werden, bevorzugt wird jedoch nur eines der genannten Halogensilane verwendet.

Als Hilfsbasen eignen sich insbesondere solche Verbindungen, die in WO 03/062171 A2 und WO 05/061416 A1 als Hilfsbasen genannt sind. Auf diese Veröffentlichungen wird an dieser Stelle explizit Bezug genommen, insbesondere auf die in WO 03/062171 A2 von Seite 7, Zeile 4 bis Seite 17, Zeile 28 genannten Hilfsbasen und die in WO 05/061416 A1 genannten Alkylimidazole. Unter den in WO 03/062171 A2 genannten Hilfsbasen sind Derivate des Imidazols und des Pyridins bevorzugt, insbesondere 1-Methylimidazol, 1-n-Butylimidazol, 2-Methylpyridin und 2-Ethylpyridin.

Hilfsbasen sind erfindungsgemäß eine solche Verbindungen, die ein Salz mit dem während der Reaktion gebildeten Halogenwasserstoffs bildet, das mit dem Wertprodukt oder der Lösung des Wertprodukts in einem geeigneten Lösungsmittel zwei nicht mischbare Phasen ausbildet und abgetrennt wird.

Bevorzugt sind solche Hilfsbasen, die nicht als Reaktant an der Reaktion teilnehmen. Weietrhin bevorzugt kann diese Hilfsbase als nukleophiler Katalysator in der Reaktion fungieren, so dass die Zugabe einer weiteren Base, beispielsweise die in der Literatur zitierten Basen Diethylamin oder Triethylamin, nicht erforderlich ist

Besonders bevorzugt sind solche Hilfsbasen, die mit dem während der Reaktion gebildeten Halogenwasserstoff ein Salz bilden, dass bei den Temperaturen, bei denen das Wertprodukt vom Salzgetrennt wird, flüssig ist.

Wie zuvor beschrieben, bildet die Hilfsbase mit dem während der Reaktion gebildeten Halogenwasserstoff ein Salz. Dabei handelt es sich je nach eingesetztem Halogensilan um Fluorwasserstoff (HF), Chlorwasserstoff (HCl), Bromwasserstoff (BrH) oder lodwasserstoff (HI) oder bei gemischten Halogensilanen der Formel (I) um Mischungen der genannten Halogenwasserstoffe. In dem erfindungsgemäßen Verfahren wird bevorzugt Chlorwasserstoff (HCl) oder Bromwasserstoff (HBr) gebildet.

Weiterhin eignet sich die Hilfsbase dazu, andere Säuren, die beispielsweise während der Reaktion zur pH-Wertregulierung zugesetzt wurden, beispielsweise Salpetersäure, salpetrige Säure, Kohlensäure, Schwefelsäure, Phosphorsäure oder Sulfonsäuren wie Methansulfonsäure, Ethansulfonsäure, Benzolsulfonsäure oder p-Toluolsulfonsäure, zu entfernen.

Enthält das Reaktionsgemisch neben der eingesetzten C₂-C₁₀-Monocarbonsäure keine weiteren Säuren, so wird pro mol abzutrennender Halogenwasserstoff in der Regel mindestens ein mol Hilfsbase verwendet, bevorzugt 1,0 bis 1,5 mol/mol, besonders bevorzugt 1,0 bis 1,3 mol/mol und insbesondere 1,0 bis 1,25 mol/mol. Sind andere Säuren, beispielsweise zur pH-Wertregulierung zugesetzt, muss die Menge an Hilfsbase entsprechend angepasst werden.

In der Regel beträgt die Verweilzeit der Hilfsbase in dem Reaktionsgemisch einige Minuten bis mehrere Stunden, bevorzugt 5 bis 120 Minuten, besonders bevorzugt 10 bis 60 Minuten und ganz besonders bevorzugt 10 bis 30 Minuten.

Idealerweise wird die Hilfsbase zusammen mit der zu silylierenden C₂-C₁₀-Monocarbonsäure vorgelegt und anschließend das Halogensilan vollständig oder kontinuierlich zugegeben.

Das Salz der Hilfsbase mit dem während der Reaktion gebildeten Halogenwasserstoff bildet mit dem Wertprodukt oder einer Lösung des Wertproduktes in einem geeigneten Lösungsmittel zwei nicht miteinander mischbare Phasen. Nicht mischbar bedeutet, dass sich zwei durch eine Phasengrenzfläche getrennt flüssige Phasen ausbilden.

Wenn das reine Wertprodukt mit dem Salz aus der Hilfsbase und dem Halogenwasserstoff gänzlich oder zu einem größeren Teil mischbar ist, kann dem Wertprodukt auch ein Lösungsmittel zugesetzt werden, um eine Entmischung oder Löslichkeitsverringerung zu erreichen. Dies ist beispielsweise dann sinnvoll, wenn die Löslichkeit des Salzes im Wertprodukt oder umgekehrt 20 Gew.-% oder mehr beträgt, bevorzugt 15 Gew.-% oder mehr, besonders bevorzugt 10 Gew.-% oder mehr und ganz besonders bevorzugt 5 Gew.-% oder mehr beträgt. Die Löslichkeit wird bestimmt unter den Bedingungen der jeweiligen Trennung. Bevorzugt wird die Löslichkeit bestimmt bei einer Temperatur, die oberhalb des Schmelzpunktes des Salzes liegt und unterhalb, bevorzugt 10 °C unterhalb, besonders bevorzugt 20 °C unterhalb der niedrigsten der folgenden Temperaturen liegt: Siedepunkt des Wertproduktes, Siedepunkt des Lösungsmittels und Temperatur der signifikanten Zersetzung des Wertproduktes.

Das Lösungsmittel ist dann als geeignet anzusehen, wenn das Gemisch aus Wertprodukt und Lösungsmittel das Salz bzw. das Salz das Wertprodukt oder eine Mischung aus Wertprodukt und Lösemittel weniger als die oben angegebenen Mengen zu lösen vermag. Als Lösungsmittel verwendbar sind beispielsweise Benzol, Toluol, o-, m- oder p-Xylol, Cyclohexan, Cyclopentan, Pentan, Hexan, Heptan, Oktan, Petrolether, Aceton, Isobutylmethylketon, Diethylketon, Diethylether, tert.-Butylmethylether, tert.-Butylethyl-ether, Tetrahydrofuran, Dioxan, Essigester, Methylacetat, Dimethylformamid, Dimethylsulfoxid, Acetonitril, Chloroform, Dichlormethan, Methylchloroform oder Gemische davon.

In der Regel ist das Wertprodukt jedoch mit dem Salz aus Hilfsbase und Halogenwasserstoff nicht mischbar, so dass auf die Zugabe eines Lösungsmittels verzichtet werden kann.

Der besondere Vorteil des erfindungsgemäßen Verfahrens liegt darin, dass die Abtrennung des Salzes aus Hilfsbase und Halogenwasserstoff durch eine einfache Flüssig-Flüssig-Phasentrennung erfolgen kann, so dass ein verfahrenstechnisch aufwendiger Umgang mit Feststoffen wegfällt.

Aus dem vom Wertprodukt abgetrennten Salz der Hilfsbase kann der Fachmann nach bekannter Art und Weise die freie Hilfsbase wiedergewinnen und dem Prozess wieder zuführen.

Die Rückgewinnung der freien Hilfsbase kann beispielsweise dadurch erfolgen, in dem man das Salz der Hilfsbase mit einer Starken Base, z. B. NaOH, KOH, Ca(OH)₂, Kalkmilch, Na₂CO₃, NaHCO₃, K₂CO₃ oder KHCO₃, gegebenenfalls in einem Lösungsmittel, wie Wasser, Methanol, Ethanol, n- oder iso-Propanol, n-Butanol, n-Pentanol oder Butanol- oder Pentanol-Isomerengemische oder Aceton, freisetzt. Die so freigesetzte Hilfsbase kann, wenn sie eine eigene Phase ausbildet, abgetrennt oder, falls sie mit dem Salz der stärkeren Base bzw. der Lösung des Salzes der stärkeren Base mischbar ist, durch Destillation aus der Mischung abtrennt werden. Falls erforderlich kann man die freigesetzte Hilfsbase auch von Salz der stärkeren Base bzw. der Lösung des Salzes der stärkeren Base durch Extraktion mit einem Extraktionsmittel, wie Lösemittel, Alkohole oder Amine, abtrennen.

Falls erforderlich kann man die Hilfsbase mit Wasser oder wässriger NaCl- oder Na₂SO₄-Lösung gewaschen und anschließend getrocknet werden, z. B. durch Abtrennung von gegebenenfalls enthaltenem Wasser mit Hilfe einer Azeotropdestillation mit Benzol, Toluol, Xylol, Butanol oder Cyclohexan.

Falls erforderlich kann die Hilfsbase vor erneuter Verwendung im erfindungsgemäßen Verfahren destilliert werden.

Wie zuvor beschrieben eignet sich die Hilfsbase einerseits zur Abtrennung des während der Reaktion gebildeten Halogenwasserstoffs und andererseits als nukleophiler Katalysator in der Silylierung der C₂-C₁₀-Monocarbonsäure.

Die Durchführung der Silylierung ist nicht beschränkt und kann erfindungsgemäß unter Abfangen des freigesetzten Halogenwasserstoffs und der gegebenenfalls zugesetzten Säure diskontinuierlich oder kontinuierlich und an Luft oder unter einer Schutzatmosphäre durchgeführt werden.

Die Silylierung kann drucklos aber auch bei Überdruck oder Unterdruck durchgeführt werden, vorzugsweise wird bei normalem Druck gearbeitet.

Die Reaktionstemperatur ist so gewählt, dass das Salz der Hilfsbase mit dem Halogenwasserstoff bei dem jeweiligen Druck in flüssiger Form vorliegt, so dass eine Flüssig-Flüssig-Phasentrennung möglich ist.

Monoethylenisch ungesättigte C₃-C₈-Monocarbonsäuren sowie deren Silylierungsprodukte sind polymerisationsfähige Verbindungen. Daher ist es für den Fall der Silylierung von monoethylenisch ungesättigten C₃-C₈-Monocarbonsäuren wichtig, auf eine ausreichende Polymerisationsinhibierung zu achten und daher in Gegenwart von üblichen Mengen von an sich bekannten Polymerisationsinhibitoren zu arbeiten. Eine unerwünschte Polymerisation ist aufgrund der freiwerdenden großen Wärmemenge sicherheitstechnisch bedenklich.

In der Regel werden, bezogen auf die monoethylenisch ungesättigten Monocarbonsäure, je Einzelsubstanz von 1 bis 10 000 ppm, bevorzugt von 10 bis 5 000 ppm, besonders bevorzugt von 30 bis 2 500 ppm und insbesondere von 50 bis 1 500 ppm eines geeigneten Stabilisators eingesetzt.

Geeignete Stabilisatoren können beispielsweise N-Oxide (Nitroxyl- oder N-Oxyl-Radikale, also Verbindungen, die wenigstens eine >N-O.-Gruppe aufweisen), wie z. B. 4-Hydroxy-2,2,6,6-tetramethylpiperidin-N-oxyl, 4-Oxo-2,2,6,6-tetramethylpiperidin-N-oxyl, 4-Acetoxy-2,2,6,6-tetramethyl-piperidin-N-oxyl, 2,2,6,6-Tetramethylpiperidin-N-oxyl, 4,4',4"-Tris(2,2,6,6-tetramethyl-piperidin-N-oxyl)-phosphit oder 3-Oxo-2,2,5,5-tetramethyl-pyrrolidin-N-oxyl; ein- oder mehrwertige Phenole, die ggf. eine oder mehrere Alkylgruppen aufweisen, wie z.B. Alkylphenole, beispielsweise o-, m- oder p-Kresol (Methylphenol), 2-tert.-Butylphenol, 4-tert.-Butylphenol, 2,4-Di-tert.-butylphenol, 2-Methyl-4-tert.-butylphenol, 2-tert.-Butyl-4-methylphenol, 2,6-tert.-Butyl-4-methylphenol, 4-tert.-Butyl-2,6-dimethylphenol oder 6-tert.-Butyl-2,4-dimethylphenol; Chinone, wie z. B. Hydrochinon, Hydrochinonmonomethylether, 2-Methylhydrochinon oder 2,5-Di-tert.-Butylhydrochinon; Hydroxyphenole, wie beispielsweise Brenzcatechin (1,2-Dihydroxybenzol) oder Benzochinon; Aminophenole, wie z. B. p-Aminophenol; Nitrosophenole, wie z. B. p-Nitrosophenol; Alkoxyphenole, wie beispielsweise 2-Methoxyphenol (Guajacol, Brenzcatechinmonomethylether), 2-Ethoxyphenol, 2-Isopropoxyphenol, 4-Methoxyphenol (Hydrochinonmonomethylether), Mono- oder Di-tert.-Butyl-4-methoxyphenol; Tocipherole, wie z. B. α-Tocopherol sowie 2,3-Dihydro-2,2-dimethyl-7-hydroxybenzofuran (2,2-Dimethyl-7-hydroxycumaran), aromatische Amine, wie z. B. N,N-Diphenylamin oder N-Nitroso-diphenylamin; Phenylendiamine, wie z. B. N,N'-Dialkyl-p-phenylendiamin, wobei die Alkylreste gleich oder verschieden sein können und jeweils unabhängig voneinander aus 1 bis 4 Kohlenstoffatomen bestehen und geradkettig oder verzweigt sein können, wie z. B. N,N'-Dimethyl-p-phenylendiamin oder N,N'-Diethyl-p-phenylendiamin, Hydroxylamine, wie z.B. N,N-Diethylhydroxylamin, Imine, wie z. B. Methylethylimin oder Methylen violett, Sulfonamide, wie z. B. N-Methyl-4-toluolsulfonamid oder N-tert.-Butyl-4-toluolsulfonamid, Oxime, wie Aldoxime, Ketoxime oder Amidoxime, wie z. B. Diethylketoxim, Methylethylketoxim oder Salicyladoxim, phosphorhaltige Verbindungen, wie z. B. Triphenylphosphin, Triphenylphosphit, Triethylphosphit, Hypophsophorige Säure oder Alkylester der Phosphorigen Säuren; schwefelhaltige Verbindungen wie z. B. Diphenylsulfid oder Phenothiazin; Metallsalze, wie Kupfer- oder Mangan-, Cer-, Nickel-, Chromsalze, beispielsweise -chloride, - sulfate, -salicylate, -tosylate, -acrylate oder -acetate, wie z. B. Kupferacetat, Kupfer(II)chlorid, Kupfersalicylat, Cer(III)acetat oder Cer(III)ethylhexanoat, oder Gemische davon sein.

Bevorzugt wird als Polymerisationsinhibitor(gemisch) mindestens eine Verbindung aus der Gruppe Hydrochinon, Hydrochinonmonomethylether, Phenothiazin, 4-Hydroxy-2,2,6,6-tetramethylpiperidin-N-oxyl, 4-Oxo-2,2,6,6-tetramethylpiperidin-N-oxyl, 2-tert.-Butylphenol, 4-tert.-Butylphenol, 2,4-Di-tert.-Butylphenol, 2-tert.-Butyl-4-methylphenol, 6-tert.-Butyl-2,4-dimethylphenol, 2,6-Di-tert.-Butyl-4-methylphenol, 2-Methyl-4-tert.-butylphenol, Hypophosphorige Säure, Kupferacetat, Kupfer(II)chlorid, Kupfersalicylat und Cer(III)acetat.

Ganz besonders bevorzugt wird Phenothiazin und/oder Hydrochinonmonomethylether (MEHQ) als Polymerisationsinhibitor verwendet.

Bevorzugt wird der/das Polymerisationsinhibitor(gemisch) als wässrige Lösung eingesetzt.

Zur weiteren Stützung der Stabilisierung kann ein sauerstoffhaltiges Gas, bevorzugt Luft oder ein Gemisch aus Luft und Stickstoff (Magerluft) anwesend sein.

Die Zugabe der Edukte der Silylierung sowie der gegebenenfalls vorliegenden sonstigen Hilfsmittel wie Lösungsmittel oder Polymerisationsinhibitoren kann beliebig erfolgen.

In einer bevorzugten Ausführungsform werden die C₂-C₁₀-Monocarbonsäure und die Hilfsbase jeweils zumindest teilweise, bevorzugt jeweils vollständig, in einem geeigneten Reaktor vorgelegt und erhitzt. Anschließend wird das Halogensilan zudosiert, wobei die Dosierung in der Regel innerhalb von einigen Minuten bis mehrere Stunden, bevorzugt 5 bis 120 Minuten, besonders bevorzugt 10 bis 60 Minuten und ganz besonders bevorzugt 10 bis 30 Minuten kontinuierlich oder portionsweise erfolgt.

Im Anschluss an die Silylierung erfolgt wie beschrieben die Flüssig-Flüssig-Abtrennung des Salzes der Hilfsbase und die folgende Rückgewinnung der Hilfsbase aus der abgetrennten Phase.

Die nach dem erfindungsgemäßen Verfahren hergestellten silylierten C₂-C₁₀-Monocarbonsäuren können als Comonomere in Copolymerisaten für verschiedenste Anwendungen eingesetzt werden.

Die folgenden Beispiele sollen die Erfindung erläutern, ohne sie jedoch einzuschränken.

In dieser Schrift verwendete Prozent- und ppm-Angaben beziehen sich, falls nicht anderes angegeben, auf Gewichtsprozente und -ppm.

### Beispiele

### Beispiel 1

### Herstellung von Trimethylsilylmethacrylat

In einem 1 L-Reaktionsgefäß wurden unter Feuchtigkeitsausschluss 220,5 g (2,54 mol) Methacrylsäure, die mit 250 ppm Hydrochinonmonomethylether stabilisiert war, vorgelegt. Es wurden 231.3 g (2,81 mol) 1-Methylimidazol zügig zugetropft, wobei die Zugabe leicht exotherm verlief. Bei 80 °C wurden innerhalb von 20 Minuten 281,1 g (2,59 mol) Chlortrimethylsilan zugetropft. Nach etwa einem Drittel der Dosierung setzte eine Trübung des Reaktionsgemisches ein, und es bildete sich eine zweite Phase. Nach vollständiger Dosierung wurde bei 90 °C die Unterphase absitzen gelassen, und 330 g der Unterphase wurden abgetrennt.

Man erhielt in der Oberphase 408 g Trimethylsilylmethacrylat (99 % Ausbeute) in einer Reinheit von 98 % (GC-Analyse), das mit 25 ppm Phenothiazin versetzt wurde.

### Vergleichsbeispiel 1

### Herstellung von Trimethylsilylmethacrylat

In einem 0,5L-Reaktionsgefäß wurden unter Feuchtigkeitsausschluss 50,0 g (0,58 mol) Methacrylsäure, die mit 250 ppm Hydrochinonmonomethylether stabilisiert war, in 250 mL Toluol unter Rühren vorgelegt. Es wurden 58,8 g (0,58 mol) Triethylamin zügig zugetropft, wobei die Zugabe leicht exotherm verlief. Bei 50 °C wurden innerhalb von 20 Minuten 63,7 g (0,59 mol) Chlortrimethylsilan zugetropft. Rasch entstand eine dicke weiße Suspension, und das Gemisch konnte nur noch schlecht gerührt werden. Die Suspension wurde über eine Glasfilternutsche abgesaugt und der Filterkuchen zweimal mit Toluol gewaschen.

Nach Entfernen des Lösungsmittels am Rotationsverdampfer wurden 63,4 g Trimethylsilylmethacrylat (58 % Ausbeute) in einer Reinheit von 84 % (GC-Analyse) erhalten.

### Beispiel 2

### Herstellung von Trimethylsilylmethacrylat

In einem 1m³-Stahl/Emaille-Rührkessel wurden unter Ausschluss von Feuchtigkeit und Sauerstoff 289 kg (3,51 kmol) 1-Methylimidazol vorgelegt. Anschließend wurden 363 kg reine Methacrylsäure (4,21 kmol; 1,2 Äquivalente) innerhalb von einer Stunde hinzudosiert, wobei die Innentemperatur auf 45 °C anstieg. Dann wurden 381 kg (3,51 kmol) Chlortrimethylsilan innerhalb von zwei Stunden hinzugefügt, wobei ein Temperaturanstieg auf 84 °C beobachtet wurde. Anschließend wurde bei einer Temperatur von 90 °C für 45 Minuten nachgerührt und die Phasentrennung durchgeführt. Es wurden 476 kg 1-Methylimidazoliumchlorid-Unterphase und 557 kg Oberphase erhalten, die zu 99 % (GC-Analyse) aus dem Produkt Trimethylsilylmethacrylat bestand (Ausbeute: 99 %). Das Produkt wurde mit 250 ppm Phenothiazin stabilisiert.

### Beispiel 3

### Herstellung von Trimethylsilylacetat

In einem 2L-Reaktionsgefäß wurden 403 g (6,70 mol) Essigsäure mit 550 g (6,70 mol) 1-Methylimidazol miteinander vermischt und anschließend mit 728 g (6,70 mol) Chlortrimethylsilan langsam versetzt. Nach beendeter Zugabe wurde die Reaktionsmischung auf 90 °C erwärmt, eine Stunde nachgerührt und innerhalb von zwei Stunden die Phasentrennung durchgeführt. Erhalten wurden 804 g 1-Methylimidazoliumchlorid-Unterphase und 867 g Produktoberphase. Die Oberphase bestand zu 97 % (GC-Analyse) aus Trimethylsilylacetat, was einer Ausbeute von 95 % entspricht.

### Beispiel 4

### Herstellung von Trimethylsilylacrylat

In einem 2L-Reaktionsgefäß wurden 517 g 1-Methylimidazol (6,30 mol) vorgelegt und 684,3 g (6,30 mol) Chlortrimethylsilan langsam hinzudosiert, wobei die Innentemperatur auf 50 °C anstieg. Anschließend wurden 454 g Acrylsäure (6,30 mol) hinzugegeben, die Temperatur der Reaktionsmischung stieg dabei auf 70 °C an. Nach beendeter Zugabe wurde eine Stunde bei 85 °C nachgerührt und innerhalb von zwei Stunden die Phasentrennung abgewartet. Erhalten wurden 783 g 1-Methylimidazoliumchlorid-Unterphase und 859 g Produktoberphase. Letztere bestand zu 96 % (GC-Analyse) aus Trimethylsilylacrylat, was einer Ausbeute von 90 % entspricht.

### Beispiel 5

### Herstellung von Dimethylsilyl-bis-methacrylat

In einem 2L-Reaktionsgefäß wurden 550 g 1-Methylimidazol (6,70 mol) vorgelegt und 697 g (8,10 mol; 1,2 Äquivalente) Methacrylsäure langsam hinzudosiert, wobei die Innentemperatur auf 60 °C anstieg. Anschließend wurden 437 g Dichlordimethylsilan (3,37 mol) hinzugegeben, die Temperatur der Reaktionsmischung wurde durch Außenkühlung auf 60 °C gehalten. Nach beendeter Zugabe wurde eine Stunde bei 85 °C nachgerührt und innerhalb von zwei Stunden die Phasentrennung abgewartet. Erhalten wurden 903 g 1-Methylimidazoliumchlorid-Unterphase und 765 g Produktoberphase. Letztere bestand zu 98 % (GC-Analyse) aus Dimethylsilyl-bis-methacrylat, was einer Ausbeute von 97 % entspricht.

## Patentansprüche

1. Verfahren zur Herstellung von silylierten Monocarbonsäuren durch Umsetzung von C₂-C₁₀-Monocarbonsäuren mit Halogensilanen der allgemeinen Formel (I)
SiHal₄₋ₓRₓ (I),
worin
Hal ein Halogenatom ausgewählt aus der Gruppe Fluor, Chlor, Brom oder Iod ist,
R unabhängig voneinander Wasserstoff, C₁-C₁₀-Alkyl oder Aryl ist, und
x eine ganze Zahl von 0 bis 3 ist,
unter Bildung von Halogenwasserstoff in Gegenwart einer Hilfsbase, **dadurch gekennzeichnet, dass** die Hilfsbase mit dem Halogenwasserstoff ein Salz bildet, das mit dem Wertprodukt oder der Lösung des Wertproduktes in einem geeigneten Lösungsmittel zwei nicht mischbare Phasen ausbildet und abgetrennt wird.

2. Verfahren nach Anspruch 1, **dadurch gekennzeichnet dass**, die C₂-C₁₀-Monocarbonsäuren ausgewählt ist aus der Gruppe der gesättigten C₂-C₈-Monocarbonsäuren und monoethylenisch ungesättigten C₃-C₈-Monocarbonsäuren.

3. Verfahren nach Anspruch 2, **dadurch gekennzeichnet, dass** die gesättigte C₂-C₈-Monocarbonsäuren ausgewählt ist aus Essigsäure, Propionsäure und Buttersäure.

4. Verfahren nach Anspruch 2, **dadurch gekennzeichnet, dass** die monoethylenisch ungesättigte C₂-C₈-Monocarbonsäuren ausgewählt ist aus Acrylsäure, Methacrylsäure, Crotonsäure, Ethacrylsäure und Maleinsäure.

5. Verfahren nach einem der vorstehenden Ansprüche, **dadurch gekennzeichnet, dass** Halogenaton des Halogensilans Chlor oder Brom ist.

6. Verfahren nach einem der vorstehenden Ansprüche, **dadurch gekennzeichnet, dass** die Substituenten R des Halogensilans gleich und C₁-C₄-Alkyl oder Phenyl sind.

7. Verfahren nach einem der vorstehenden Ansprüche, **dadurch gekennzeichnet, dass** das Halogensilan ausgewählt ist aus SiCl(CH₃)₃, SiCl₂(CH₃)₂, SiCl₃CH₃, SiCl(C₂H₅)₃, SiCl₃C₂H₅, SiCl(iso-C₃H₇)₃, SiCl(n-C₄H₉)₃, SiCl(tert.-C₄H₉)₃, SiCl₃(n-C₄H₉), SiCl₃(tert.-C₄H₉), SiCl(n-C₄H₉)(CH₃)₂und SiCl(tert.-C₄H₉)(CH₃)₂.

8. Verfahren nach einem der vorstehenden Ansprüche, **dadurch gekennzeichnet, dass** die Hilfsbase gleichzeitig als nukleophiler Katalysator für die Silylierung fungiert.

9. Verfahren nach Anspruch 8, **dadurch gekennzeichnet, dass** die Hilfsbase ausgewählt ist aus 1-Methylimidazol, 1-n-Butylimidazol, 2-Methylpyridin und 2-Ethylpyridin.

10. Verfahren nach einem der vorstehenden Ansprüche, **dadurch gekennzeichnet, dass** pro mol abzutrennendem Halogenwasserstoff mindestens ein mol Hilfsbase verwendet wird.

11. Verfahren nach Anspruch 10, **dadurch gekennzeichnet, dass** das Salz der Hilfsbase in dem Wertprodukt oder in der Lösung des Wertproduktes in einem geeigneten Lösungsmittel weniger als 20 Gew.-% löslich ist.

12. Verfahren nach einem der vorstehenden Ansprüche, **dadurch gekennzeichnet, dass** die C₂-C₁₀-Monocaronsäure und die Hilfsbase zumindest teilweise in einem Reaktor vorgelegt werden und anschließend die Dosierung der Halogensilans erfolgt.

## Claims

1. A process for preparing silylated monocarboxylic acids by reacting C₂-C₁₀-monocarboxylic acids with halosilanes of the general formula (I)
SiHal₄₋ₓRₓ (I)
in which
Hal is a halogen atom selected from the group of fluorine, chlorine, bromine and iodine,
R is independently hydrogen, C₁-C₁₀-alkyl or aryl and
x is an integer of 0 to 3
to form hydrogen halide in the presence of an auxiliary base, wherein the auxiliary base and the hydrogen halide form a salt which forms two immiscible phases with the product of value or the solution of the product of value in a suitable solvent and is removed.

2. The process according to claim 1, wherein the C₂-C₁₀-monocarboxylic acids are selected from the group of the saturated C₂-C₈-monocarboxylic acids and monoethylenically unsaturated C₃-C₈-monocarboxylic acids.

3. The process according to claim 2, wherein the saturated C₂-C₈-monocarboxylic acids are selected from acetic acid, propionic acid and butyric acid.

4. The process according to claim 2, wherein the monoethylenically unsaturated C₂-C₈-monocarboxylic acids are selected from acrylic acid, methacrylic acid, crotonic acid, ethacrylic acid and maleic acid.

5. The process according to any one of the preceding claims, wherein the halogen atom of the halosilane is chlorine or bromine.

6. The process according to any one of the preceding claims, wherein the R substituents of the halosilane are the same and are each C₁-C₄-alkyl or phenyl.

7. The process according to any one of the preceding claims, wherein the halosilane is selected from SiCl(CH₃)₃, SiCl₂(CH₃)₂, SiCl₃CH₃, SiCl(C₂H₅)₃, SiCl₃C₂H₅, SiCl(iso-C₃H₇)₃, SiCl(n-C₄H₉)₃, SiCl (tert-C₄H₉)₃, SiCl₃(n-C₄H₉), SiCl₃(tert-C₄H₉), SiCl (n-C₄H₉)(CH₃)₂ and SiCl (tert-C₄H₉)(CH₃)₂.

8. The process according to any one of the preceding claims, wherein the auxiliary base simultaneously functions as a nucleophilic catalyst for the silylation.

9. The process according to claim 8, wherein the auxiliary base is selected from 1-methylimidazole, 1-n-butylimidazole, 2-methylpyridine and 2-ethylpyridine.

10. The process according to any one of the preceding claims, wherein at least one mole of auxiliary base is used per mole of hydrogen halide to be removed.

11. The process according to claim 10, wherein the salt of the auxiliary base has a solubility in the product of value or in the solution of the product of value in a suitable solvent of less than 20% by weight.

12. The process according to any one of the preceding claims, wherein the C₂-C₁₀-monocarboxylic acid and the auxiliary base are at least partly initially charged in a reactor and then the halosilane is metered in.

## Revendications

1. Procédé pour la préparation d'acides monocarboxyliques silylés, par mise en réaction d'acides monocarboxyliques en C₂-C₁₀ avec des halogénosilanes de formule générale (I)
SiHal₄₋ₓRₓ (I),
dans laquelle
Hal est un atome d'halogène choisi dans le groupe constitué par le fluor, le chlore, le brome ou l'iode,
R est chaque fois indépendamment un atome d'hydrogène, un groupe alkyle en C₁-C₁₀ ou aryle, et
x est un nombre entier valant de 0 à 3,
avec formation d'halogénure d'hydrogène en présence d'une base auxiliaire, **caractérisé en ce que** la base auxiliaire forme avec l'halogénure d'hydrogène un sel qui forme avec le produit de valeur, ou la solution du produit de valeur dans un solvant convenable, deux phases non miscibles.

2. Procédé selon la revendication 1, **caractérisé en ce que** les acides monocarboxyliques en C₂-C₁₀ sont choisis dans le groupe des acides monocarboxyliques en C₂-C₈ saturés et des acides monocarboxyliques en C₃-C₈ à insaturation monoéthylénique.

3. Procédé selon la revendication 2, **caractérisé en ce que** l'acide monocarboxylique en C₂-C₈ saturé est choisi parmi l'acide acétique, l'acide propionique et l'acide butyrique.

4. Procédé selon la revendication 2, **caractérisé en ce que** l'acide monocarboxylique en C₂-C₈ à insaturation monoéthylénique est choisi parmi l'acide acrylique, l'acide méthacrylique, l'acide crotonique, l'acide éthacrylique et l'acide maléique.

5. Procédé selon l'une quelconque des revendications précédentes, **caractérisé en ce que** l'atome d'halogène de l'halogénosilane est un atome de chlore ou de brome.

6. Procédé selon l'une quelconque des revendications précédentes, **caractérisé en ce que** les substituants R de l'halogénosilane sont identiques et sont des groupes alkyle en C₁-C₄ ou phényle.

7. Procédé selon l'une quelconque des revendications précédentes, **caractérisé en ce que** l'halogénosilane est choisi parmi SiCl(CH₃)₃, SiCl₂(CH₃)₂, SiCl₃CH₃, SiCl(C₂H₅)₃, SiCl₃C₂H₅, SiCl(iso-C₃H₇)₃, SiCl(n-C₄H₉)₃, SiCl(tert-C₄H₉)₃, SiCl₃(n-C₄H₉), SiCl₃(tert-C₄H₉), SiCl(n-C₄H₉)(CH₃)₂ et SiCl(tert-C₄H₉)(CH₃)₂.

8. Procédé selon l'une quelconque des revendications précédentes, **caractérisé en ce que** la base auxiliaire fonctionne en même temps comme catalyseur nucléophile pour la silylation.

9. Procédé selon la revendication 8, **caractérisé en ce que** la base auxiliaire est choisie parmi le 1-méthylimidazole, le 1-n-butylimidazole, la 2-méthyl-pyridine et la 2-éthylpyridine.

10. Procédé selon l'une quelconque des revendications précédentes, **caractérisé en ce qu'**on utilise au moins une mole de base auxiliaire par mole d'halogénure d'hydrogène à séparer.

11. Procédé selon la revendication 10, **caractérisé en ce que** le sel de la base auxiliaire est soluble à moins de 20 % en poids dans le produit de valeur ou dans la solution du produit de valeur dans un solvant convenable.

12. Procédé selon l'une quelconque des revendications précédentes, **caractérisé en ce qu'**on dispose au préalable dans un réacteur au moins en partie l'acide monocarboxylique en C₂-C₁₀ et la base auxiliaire et ensuite on effectue l'addition dosée de l'halogénosilane.
